Europäisches Patentamt

European Patent Office

Office européen des brevets

(19)

(11) Numéro de publication: **0 120 798**
**B1**

## (12) FASCICULE DE BREVET EUROPEEN

(45) Date de publication du fascicule du brevet:
**29.01.86**

(51) Int. Cl.⁴: **B 01 J 27/22,** C 10 G 35/06

(21) Numéro de dépôt: **84420057.6**

(22) Date de dépôt: **23.03.84**

(54) **Catalyseurs de reformage à base de carbures de tungstène et de molybdène, et leur méthode d'utilisation.**

(30) Priorité: **25.03.83 FR 8305480**

(43) Date de publication de la demande:
**03.10.84 Bulletin 84/40**

(45) Mention de la délivrance du brevet:
**29.01.86 Bulletin 86/5**

(84) Etats contractants désignés:
**DE GB NL**

(56) Documents cités:
**DE - A - 3 103 171**
**US - A - 2 755 228**
**US - A - 4 155 928**
**US - A - 4 219 445**
**US - A - 4 271 041**
**US - A - 4 325 842**
**US - A - 4 325 843**
**US - A - 4 326 992**

(73) Titulaire: **EUROTUNGSTENE POUDRES, 54 avenue Rhin et Danube, F-38100 Grenoble (FR)**

(72) Inventeur: **Leclercq, Lucien, 2, rue Paul Gauguin, F-59655 Villeneuve d'Asq (FR)**
Inventeur: **Provost, Marcelle, 4, rue de Nimègue, F-86022 Poitiers (FR)**

(74) Mandataire: **Séraphin, Léon et al, PECHINEY 28, rue de Bonnel, F-69433 Lyon Cedex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet des catalyseurs de réformage de produits pétroliers, sous forme massique ou supportée, dont la partie active est constituée de carbures de tungstène et de molybdène, et une méthode d'utilisation de ceux-ci.

Les carbures de tungstène ou de molybdène simples ont été utilisés en tant que catalyseurs de diverses réactions dans le domaine de la pétrochimie; en particulier la réactivité du carbure de molybdène massique dans l'hydrogénolyse de l'éthane a été étudiée par SINFELT et al. dans la Revue «Nature Physical Science» 229 (1971), 27. D'autre part, BOUDART et al., dans «Science» 181 (1973), 547, ont trouvé que le carbure de tungstène ressemble au platine pour la réaction d'isomérisation du diméthyl-2,2 propane.

Plus récemment, un brevet US 4 271 041 (2 juin 1981) de LECLERCQ et BOUDART décrit la synthèse d'oxycarbures de molybdène d'aires pouvant atteindre 60 m²g⁻¹ et leur application à la synthèse catalytique d'hydrocarbures à partir de CO et H₂.

En ce qui concerne les carbures supportés, MITCHELL et al. dans le «Journal of Catalysis» 78 (1982) 116-125, ont synthétisé des catalyseurs de carbure de molybdène (Mo₂C) supporté sur des charbons actifs obtenus à partir de noix de coco (GIRDLER G 32).

Des catalyseurs supportés sur alumine ont été utilisés dans la réaction de méthanation à partir de H₂ et CO, par exemple dans les brevets US 4 325 842, 4 326 992 en ce qui concerne Mo₂C ou les brevets US 4 325 843, 4 331 544, 4 155 928, 4 219 445 en ce qui concerne WC.

Cependant, aucun de ces documents ne décrit ni ne suggère l'utilisation des carbures mixtes correspondants comme catalyseurs pour le réformage des produits pétroliers, c'est-à-dire lors de réactions permettant d'obtenir des essences à indice d'octane plus élevé, à partir du naphta, en particulier par la catalyse des réactions de déshydrocyclisation et d'isomérisation et l'inhibition partielle des réactions d'hydrogénolyse.

L'invention concerne donc les catalyseurs de réformage constitués de carbures mixtes de Mo et W, de formule générale $(Mo_x W_{1-x})_y C_z$, dans laquelle:

$$0 < x < 1, 1 \leqslant y \leqslant 2 \text{ et } 0,8 \leqslant z \leqslant 1.$$

La structure de ces carbures évolue de la structure hexagonale simple type WC pour y voisin de 1 à la structure hexagonale compacte de type Mo₂C pour y voisin de 2.

Les catalyseurs peuvent contenir jusqu'à 0,5% en poids de C libre.

Les valeurs préférentielles de x vont de 0,15 à 0,70.

Ces catalyseurs sont utilisables sous forme massique ou sous forme dispersée sur un support adéquat, de préférence en alumine ou en charbon actif.

Ces catalyseurs offrent par rapport aux catalyseurs à base de Pt, généralement utilisés dans le réformage catalytique, outre l'avantage d'un prix moins élevé, celui d'une résistance élevée à l'empoisonnement par les produits soufrés (thiorésistance). Leur utilisation évite donc une étape préliminaire d'hydro-traitement des produits pétroliers pour en éliminer les composés du soufre. Cette thiorésistance sera illustrée par un exemple.

La préparation de ces catalyseurs a été la suivante:

— Catalyseurs massiques: ils ont été préparés à partir d'une suspension aqueuse de paratungstate d'ammonium et/ou de paramolybdate d'ammonium, dont les acides sont coprécipités (ou l'acide est précipité) par addition d'acide chlorhydrique. Après plusieurs lavages-décantations, le précipité est filtré et séché à 370-390 K. La carburation a été effectuée par deux voies:

a) en deux étapes: réduction des acides (ou de l'acide) par l'hydrogène à 1070-1170 K, puis carburation des métaux (ou du métal) par le carbone (noir d'acéthylène) à 1770-1870 K, sous atmosphère protectrice d'hydrogène.

b) soit en une seule étape: réduction des acides (ou de l'acide) par l'hydrogène à 870 K, remplacement de l'hydrogène par le monoxyde de carbone et carburation sous ce gaz à 1270 K.

Ces catalyseurs ont une granulométrie Fisher inférieure à 5 micromètres.

— Catalyseurs supportés:
— Sur alumine:
Nous utilisons deux méthodes:

c) une alumine de grande surface spécifique (par exemple Exal. Gamma de 100 m²·g⁻¹ de surface spécifique) est imprégnée d'une solution aqueuse de paratungstate d'ammonium et/ou de paramolybdate d'ammonium. On sèche ensuite à 420 K. La réduction-carburation se fait en une seule étape en utilisant l'hydrogène (réduction) jusqu'à 870 K, puis le monoxyde de carbone (carburation) de 870 à 1270 K.

d) dans un récipient en silice, on fond à 370-470 K de l'alun d'ammonium $Al_2(SO_4)_3 \cdot (NH_4)_2 SO_4 \cdot 24 H_2O$, et dans le produit liquide, on dissout la poudre de paratungstate d'ammonium et/ou la poudre de paramolybdate d'ammonium, en agitant pour homogénéiser. Le mélange est ensuite porté pendant plusieurs heures à 670 K et se décompose ainsi en alumine finement divisée contenant une dispersion homogène des oxydes de tungstène et/ou de molybdène. La réduction-carburation se fait en une seule étape en utilisant l'hydrogène (réduction) jusqu'à 870 K, puis le monoxyde de carbone (carburation) de 870 à 1270 K.

### Sur charbon actif

Les catalyseurs sur charbon actif ont été préparés par imprégnations successives du charbon actif à partir de solutions de molybdate d'ammonium et de tungstate d'ammonium évaporées à sec à l'air à 400 K dans un réacteur en verre. L'ensemble est ensuite calciné sous azote à 773 K pendant 16 heures pour éliminer les ions ammonium sous forme d'ammoniac. Cette calcination est suivie d'une réduction des oxydes de W et Mo formés, sous hydrogène à 773 K.

Les composés résultants ainsi formés sont alors chauffés sous hydrogène à 1073 K et réagissent avec le carbone du support pour conduire aux carbures mixtes de tungstène et de molybdène. Le charbon actif utilisé est commercialisé sous le nom de «cecalite» (CECA SA 1961). Il a été broyé et tamisé de manière à obtenir des particules de dimensions comprises entre 0,125 et 0,160 mm. Le volume total des pores est de 0,3 cm$^3$/g et leur aire B.E.T. est de 610 m$^2$/g. Ce charbon contient également des teneurs pondérales de 900 ppm de W et 280 ppm de Mo et aussi 0,16% de soufre.

Il a été constaté de façon surprenante que la nitruration préalable du catalyseur avant utilisation dans un mélange $N_2+H_2$ (de préférence équimoléculaire) vers 1023 K augmente considérablement l'activité et la sélectivité dudit catalyseur.

On appelle activité du catalyseur le nombre de moles du produit de départ transformées par unité de temps lors d'une réaction d'un type déterminé, rapporté à la masse du catalyseur utilisé. Elle s'exprime par exemple en mole $h^{-1} g^{-1}$. Pour les catalyseurs massiques, la masse même du catalyseur est prise en considération; pour les catalyseurs supportés, on prend par convention la masse des éléments W et/ou Mo du catalyseur.

On appelle sélectivité du catalyseur le rapport des vitesses de transformation du produit initial lors d'une réaction d'un type déterminé à la vitesse totale de transformation du produit initial.

Les exemples suivants permettront d'illustrer et de mieux comprendre l'invention.

L'activité et la sélectivité des catalyseurs ont été mesurées lors de diverses réactions types représentatives du réformage telles que:

a) celles du n-hexane en présence d'hydrogène pour laquelle on a distingué les réactions de types suivants:

— *L'hydrogénolyse* ou craquage du n-hexane conduisant à des produits de rupture des liaisons carbone-carbone, du méthane au pentane et leurs dérivés déshydrogénés éthylène, propène, butènes et pentènes (activité $V_H$ et sélectivité $S_H$).

— *L'isomérisation:* dont les produits principaux sont les diméthylbutanes et le méthyl-2 et méthyl-3 pentane (activité Vi et sélectivité Si).

— *La déshydrogénation:* qui conduit principalement à des monooléfines (hexène 1, hexènes 2 cis et trans) — activité Vo et sélectivité So.

— *La déshydrocyclisation:* transforme le n-hexane en benzène principalement, mais aussi en quantités moindres en méthylcyclopentane, en cyclohexane, cyclohexène et cyclohexadiènes (activité Vc et sélectivité Sc).

— *L'homologation:* augmente la chaîne carbonée d'un carbone pour donner du toluène.

L'activité totale Vt est la somme des activités définies ci-dessus.

b) La déshydrogénation du cyclohexane en benzène (réaction favorable).

c) L'hydrogénolyse du butane en méthane, éthane, propane (réaction défavorable).

*Exemple 1: Catalyseurs massiques*

Des catalyseurs massiques dont les compositions pondérales et les surfaces spécifiques sont reportées au Tableau I ont été préparées suivant la méthode (a) décrite ci-dessus.

*Tableau I — Composition des catalyseurs massiques à base de carbure de Mo et W*

| REP | Catalyseurs | Teneurs exprimées en grammes pour 100 g de produit brut | | | | |
|---|---|---|---|---|---|---|
| | | W | Mo | C total | C libre | Aire BET ($m^2 \cdot g^{-1}$) |
| WC-2 | WC | 93,5 | — | 6,17 | 0,10 | 2,7 |
| A1 | (W,Mo) C | 90,85 | 2,87 | 6,28 | 0,01 | 1,5 |
| B | » | 83,65 | 9,58 | 6,77 | 0,14 | 1,2 |
| B1 | » | 83,66 | 9,54 | 6,80 | 0,22 | 1,2 |
| C1 | » | 79,21 | 13,86 | 6,93 | 0,09 | 1,7 |
| D1 | » | 78,42 | 14,65 | 6,93 | 0,01 | 0,5 |
| E1 | $Mo_2C_{1-\varepsilon}$ | — | 93,86 | 6,14 | 0,32 | 0,5 |
| E2 | $Mo_2C_{1-\varepsilon}$ | — | 94 | 6,12 | 0,31 | 0,5 |

Les réactions sont conduites à la pression atmosphérique dans un réacteur dynamique à flux continu contenant le catalyseur sur une plaque de quartz fritté. Les produits de réaction sont analysés quantitativement par chromatographie en phase gazeuse.

a) Les conditions expérimentales du réformage du n-hexane sont les suivantes: la température est de 773 K, le rapport des pressions partielles d'hydrogène ($P_H$) et d'hydrocarbure ($P_C$) est égal à: 9 ($P_H$=0,9 atm* et $P_C$=0,1 atm.); le débit d'hexane est de $1,532 \cdot 10^{-2}$ mole par heure.

* 1 atm correspond à $1,01 \cdot 10^5$ Pa.

Les vitesses des différentes réactions, exprimées en $10^{-4}$ mole de n-hexane transformé en chacun des produits de réaction par heure et par gramme de catalyseur, sont reportées au Tableau II.

*(Tableau en page suivante)*

Les carbures mixtes massiques sont toujours plus actifs globalement que les carbures monométalliques d'un facteur 1,5 à 7,5 pour les vitesses totales. Ils présentent de plus des maxima d'activité pour un type de réaction donné ($B_1$ pour la formation de produits cycliques et aromatiques, $C_1$ pour la formation d'oléfines, $D_1$ pour la formation de produits d'hydrogénation).

*Tableau II — Activités des catalyseurs massiques dans le réformage du n-hexane*

| Rep. | Catalyseurs | $V_H$ | $V_0$ | $V_C$ | $V_T$ |
|------|-------------|-------|-------|-------|-------|
| WC-2 | WC | 0,33 | 0,44 | 0,18 | 0,95 |
| B1 | (Mo, W) C | 0,42 | 0,65 | 0,42 | 1,49 |
| C1 | » | 0,71 | 1,89 | 0,38 | 2,98 |
| D1 | » | 1,18 | 0,29 | 0,24 | 1,71 |
| $E_2$ | $Mo_2C_{1-\varepsilon}$ | 0,11 | 0,18 | 0,1 | 0,39 |

La sélectivité des catalyseurs essayés est reportée dans le Tableau III.

*Tableau III — Sélectivité des catalyseurs massiques*

| Rep. | Catalyseurs | $S_H$ | $S_0$ | $S_C$ |
|------|-------------|-------|-------|-------|
| WC-2 | WC | 0,347 | 0,463 | 0,190 |
| B1 | (W, Mo) C | 0,282 | 0,436 | 0,282 |
| C1 | » | 0,238 | 0,634 | 0,128 |
| D1 | » | 0,690 | 0,170 | 0,140 |
| $E_2$ | $Mo_2C_{1-\varepsilon}$ | 0,282 | 0,462 | 0,256 |

Les carbures mixtes offrent une grande diversité de sélectivité en fonction de la composition relative en molybdène et en tungstène. Le catalyseur $B_1$ augmente la sélectivité en produits cycliques et aromatiques par rapport aux carbures monométalliques de tungstène et de molybdène, $C_1$ la sélectivité en oléfines, $D_1$ en produits de craquage ou d'hydrogénolyse.

b) Les conditions expérimentales de la déshydrogénation du cyclohexane sont les suivantes: la température est de 623 K, le rapport des pressions partielles d'hydrogène ($P_H$) et d'hydrocarbure ($P_C$) est égal à: 9 ($P_H = 0,9$ atm et $P_C = 0,1$ atm); le débit de cyclohexane est de $1,85 \cdot 10^{-2}$ mole par heure.

La vitesse de la réaction, exprimée en $10^{-4}$ mole de cyclohexane transformé en benzène par heure et par gramme de catalyseur est reportée dans le Tableau IV, ainsi que la composition atomique relative en métal $\left(\dfrac{\% \text{ Mo}}{\text{Mo+W}}\right)$, la stœchiométrie métal-carbone du carbure $\left(\dfrac{C}{W+Mo}\right)$ et le taux de carbone libre $\left(\dfrac{C_L}{W+Mo}\right)$.

*Tableau IV — Activités ($V_D$) des carbures mixtes massiques de W et Mo dans la déshydrogénation du cyclohexane*

| Catalyseurs | $\%\dfrac{Mo}{Mo+W}$ (a) | $\dfrac{C^-}{W+Mo}$ (b) | $\dfrac{C_L}{W+Mo}$ (c) | $S_{-1}$ $m^2$ g (d) | $V_D$ (e) |
|-------------|--------|--------|--------|--------|--------|
| WC-2 | 0 | 0,992 | 0,016 | 2,4 | 15,5 |
| A1 | 5,70 | 0,997 | 0,0016 | 1,5 | 11,6 |
| B1 | 17,91 | 0,988 | 0,028 | 1,2 | 6,6 |
| C1 | 25,09 | 0,990 | 0,013 | 1,7 | 41,7 |
| D1 | 26,36 | 0,996 | 0,001 | 0,4 | 5,9 |
| E1 | 100 | 0,496 | 0,027 | 0,4 | 5,5 |

(a) Rapport atomique donnant le pourcentage d'atomes de molybdène sur le nombre d'atomes total de métal (W+Mo).

(b) taux de carburation = rapport atomique du nombre d'atomes de carbone lié au métal (type carbure $C^-$) par atome.

(c) taux de carbone libre = rapport atomique du nombre d'atomes carbone libre ($C_L$) par atome métallique.

(d) aire spécifique du catalyseur.

(e) vitesse de déshydrogénation du cyclohexane en benzène.

On constate qu'il existe une composition pour laquelle la vitesse de déshydrogénation du cyclohexane en benzène est supérieure à celle des carbures monométalliques (catalyseur $C_1$).

c) La réaction d'hydrogénolyse du butane en méthane, éthane, propane, s'accompagne d'isomérisation en isobutane. Les conditions expérimentales sont les suivantes: la température est de 623 K, $P_H/P_C = 9$, $P_H = 0,9$ atm et $P_C = 0,1$ atm; le débit de butane est de 0,02 mole par heure. Les vitesses des réactions d'hydrognénolyse et d'isomérisation, exprimées en $10^{-5}$ mole de butane transformé en chacun des produits de réaction par heure et par gramme de catalyseur sont reportées au Tableau V.

*Tableau V — Activités des carbures mixtes massiques de W et Mo dans l'hydrogénolyse du butane*

| Catalyseurs | (a) $V_H$ | (b) $V_i$ | (c) $\dfrac{V_D}{V_H}$ |
|-------------|-----------|-----------|-----------|
| WC-2 | 8,9 | 0,62 | 17,5 |
| A1 | 5,4 | 0,63 | 21,5 |
| B1 | 1,4 | 0,23 | 47 |
| C1 | 9,1 | 1,3 | 46 |
| D1 | 1,1 | 0,23 | 53,5 |
| E1 | 1,54 | 0,4 | 36 |

(a) Vitesse d'hydrogénolyse du butane en méthane, éthane, propane.

(b) Vitesse d'isomérisation du butane en isobutane.
(c) Rapport des vitesses de déshydrogénation
   du cyclohexane et des vitesses d'hydrogénolyse du butane à une même température de 350°C.

Sur les catalyseurs, la vitesse d'hydrogénolyse du butane ($V_H$) est beaucoup plus faible que la déshydrogénation du cyclohexane ($V_D$). Les rap-ports des vitesses $\dfrac{V_D}{V_H}$ les plus favorables sont ceux des catalyseurs $B_1$, $C_1$, $D_1$, à base de carbures mixtes.

### Exemple 2 – Catalyseurs supports

Les catalyseurs supportés, dont les compositions sont reportées aux Tableaux VI et VII, ont été préparés conformément aux méthodes décrites ci-dessus.

*Tableau VI – Composition massique des catalyseurs (à base de carbure de Mo et W) supportés sur alumine*

| Rep. | Catalyseurs/ support | Teneurs exprimées en grammes pour 100 g de produit brut | | | |
|---|---|---|---|---|---|
| | | W | Mo | C total | C libre |
| $I_{1\,(+)}$ | $WC/Al_2O_3$ | 5,3 | — | 0,62 | 0,35 |
| $I_{2\,(+)}$ | $(W, Mo)C/Al_2O_3$ | 6,1 | 0,40 | 0,73 | 0,35 |
| $I_{3(++)}$ | » » | 31,0 | 3,0 | 3,17 | 0,43 |
| $K_1$ | » » | 4,32 | 0,73 | 0,34 | 0,06 |
| $K_2$ | » » | 3,08 | 1,21 | 0,36 | 0,10 |
| $K_3$ | » » | 2,70 | 1,82 | 1,07 | 0,81 |

$(+)$ Méthode de préparation (c)
$(++)$ Méthode de préparation (d)

*Tableau VII – Composition massique des catalyseurs (à base de carbu-re Mo et W) supportés sur charbon actif*

| Rep. | Catalyseurs/ support | Teneurs exprimées en grammes pour 100 g de produit brut | | | |
|---|---|---|---|---|---|
| | | W | Mo | C total | C libre |
| $MLC_1$ | WC/C actif | 8,14 | 0,025 | 77,8 | — |
| MLC1-A | (W, Mo)C/C actif | 5,83 | 1,98 | — | — |
| MLC-B-4 | » | 2,89 | 1,27 | — | — |
| MLC-B-5 | » | 2,54 | 2,59 | — | — |
| MLC-2 | » | 4,85 | 4,99 | 78,5 | — |
| MLC-3 | » | 6,04 | 8,21 | 81,03 | — |
| MLC-B-6 | » | | | | |
| MLC-4 | $Mo_2C/C$ actif | — | 9 | 78,5 | |
| K 4 | (W, Mo)C/C actif | 2,0 | 0,67 | — | — |
| K 5 | » | 2,35 | 1,12 | — | — |
| K 6 | » | 2,68 | 1,83 | — | — |

a) *Réformage du n-hexane:* les activités de ces carbures mixtes de tungstène et de molybdène supportés sur alumine et charbon actif ont été mesurées à T = 823 K, à la pression atmosphérique $P_H/P_C$ = 9, le débit d'hexane étant de 1,532 · $10^{-2}$ mole · h⁻¹ (Tableau VIII). Ces activités expri-mées en $10^{-2}$ mole · h⁻¹ · g⁻¹ de (W+Mo) sont de deux ordres de grandeur, supérieures à celles obtenues avec les catalyseurs massiques.

*(Tableaux en page suivante)*

Les carbures mixtes supportés favorisent la réaction de déshydrocyclisation par rapport aux carbures monométalliques de tungstène ou de molybdène. Les activités totales passent par un maximum en fonction du rapport atomique Mo/Mo+W compris entre 0,39 et 0,57 pour les carbures mixtes supportés sur charbon actif, et entre 0,24 et 0,57 pour les catalyseurs supportés sur alumine. Par contre, les catalyseurs sur charbon actif ont une activité hydrogénolysante (ou de craquage) importante, les sélectivités en produits cycliques maximales étant déplacées vers des rapports Mo/ Mo+W de 0,66 à 0,85. Ce qui n'est pas le cas pour les carbures mixtes sur alumine dont les activités et les sélectivités en produits cycliques restent dans la gamme de x de 0,24 à 0,43.

b) *Déshydrogénation du cyclohexane:* les activités de ces carbures mixtes de tungstène et de molybdène supportés sur alumine et charbon actif ont été mesurées dans la déshydrogénation du cyclohexane à une température de 673 K. Les conditions de pressions et de débits sont identiques à

*Tableau VIII — Activités des carbures mixtes de W et Mo supportés dans le réformage du n-hexane*

| Rep./ méthode | Catalyseurs support | $V_H$ | $V_C$ | $V_O$ | $V_I$ | $V_T$ |
|---|---|---|---|---|---|---|
| $MLC_1$ | WC/C | 3,2 | 0,68 | 0,44 | 0,0025 | 4,75 |
| $MLC_2$ | (W, Mo)C/C | 2,06 | 2,54 | 0,19 | 0,03 | 4,82 |
| $MLC_3$ | » | 1,56 | 0,68 | 0,44 | 0,022 | 3,28 |
| $MLC_4$ | $Mo_2C/C$ | 2,09 | 0,65 | 0,48 | 0,021 | 3,24 |
| $I_1/c$ | $WC/Al_2O_3$ | 1,65 | 1,76 | 0,19 | 0,015 | 3,62 |
| $I_2/c$ | $(W, Mo)C/Al_2O_3$ | 0,93 | 1,22 | 0,37 | 0,014 | 2,53 |
| $I_3/d$ | »         » | 0,22 | 0,17 | 0,11 | 0,0025 | 0,503 |
| $I_2$ nitruré à 823 K | | 0,76 | 0,73 | 0,32 | 0,006 | 1,82 |
| $I_2$ nitruré à 1023 K | | 1,50 | 2,22 | 0,33 | 0,021 | 4,07 |
| $K_1$ | $(W, Mo)C/Al_2O_3$ | 0,48 | 1,97 | 0,83 | 0,3 | 3,58 |
| $1K_2$ | » | 1,14 | 4,4 | 1,80 | 0,55 | 7,89 |
| $K_3$ | » | 0,87 | 3,3 | 1,16 | 0,44 | 5,77 |
| $K_4$ | (W, Mo)C/C | 3,82 | 2,00 | 2,42 | 0,22 | 8,46 |
| $K_5$ | » | 6,38 | 3,83 | 3,83 | 0,46 | 14,49 |
| $K_6$ | » | 3,75 | 1,50 | 1,59 | 0,18 | 7,02 |

Les sélectivités sont reportées au Tableau IX suivant:

*Tableau IX — Sélectivités des carbures mixtes de tungstène et de molybdène supportés sur alumine et charbon actif dans le réformage du n-hexane*

| Rep. | Catalyseurs/ support | Fraction atomique Mo/Mo+W | $S_H$ | $S_C$ | $S_O$ | $S_i$ | $S_{B/C}$[a] |
|---|---|---|---|---|---|---|---|
| $MLC_1$ | WC/C | 0 | 0,751 | 0,158 | 0,085 | 0,006 | 0,939 |
| $MLC_2$ | (Mo, W)C/C | 0,6635 | 0,428 | 0,526 | 0,040 | 0,006 | 0,969 |
| $MLC_3$ | » | 0,7225 | 0,476 | 0,206 | 0,133 | 0,007 | 0,870 |
| $MLC_4$ | $Mo_2C/C$ | 1 | 0,645 | 0,20 | 0,148 | 0,006 | 0,855 |
| $I_1$ | $WC/Al_2O_3$ | 0 | 0,456 | 0,487 | 0,053 | 0,004 | 0,886 |
| $I_1$ | $(Mo, W)C/Al_2O_3$ | 0,1116 | 0,363 | 0,481 | 0,146 | 0,005 | 0,983 |
| $I_3$ | »         » | 0,1565 | 0,440 | 0,342 | 0,213 | 0,005 | 0,817 |
| $I_2$ nitruré à 823 K | | — | 0,420 | 0,400 | 0,716 | 0,004 | 0,848 |
| $I_2$ nitruré à 1023 K | | — | 0,370 | 0,545 | 0,080 | 0,005 | 0,925 |
| $K_1$ | $(Mo, W)C/Al_2O_3$ | 0,245 | 0,113 | 0,551 | 0,232 | 0,084 | 0,844 |
| $K_2$ | »         » | 0,429 | 0,114 | 0,558 | 0,228 | 0,007 | 0,920 |
| $K_3$ | »         » | 0,564 | 0,24 | 0,293 | 0,373 | 0,094 | 0,930 |
| $K_4$ | (Mo, W)C/C | 0,391 | 0,452 | 0,236 | 0,286 | 0,026 | 0,868 |
| $K_5$ | » | 0,477 | 0,440 | 0,264 | 0,264 | 0,032 | 0,905 |
| $K_6$ | » | 0,567 | 0,534 | 0,214 | 0,226 | 0,026 | 0,867 |
| (a) sélectivité en benzène dans les produits cycliques formés par déshydrocyclisation du n-hexane. | | | | | | | |

celles pour les catalyseurs massiques. Les résultats sont exprimés en $10^{-2}$ mole $h^{-1}$ $g^{-1}$ de métal total W+Mo aux Tableaux X et XI:

*(Tableaux en page suivante)*

Les catalyseurs les plus actifs dans la déshydrogénation du cyclohexane sont des carbures mixtes tantôt supportés sur alumines ($K_1$, $K_2$, $K_3$ pour $\frac{Mo}{Mo+W}$ de 0,24 à 0,57), tantôt supportés sur charbon actif ($K_4$, $K_5$ pour x de 0,39 à 0,48).

En outre, l'utilisation de n-hexane contenant jusqu'à 800 ppm en poids de thiophène a montré que les carbures mixtes massiques de W et Mo sont insensibles aux poisons soufrés et présentent donc une intéressante propriété de thiorésistance qui

*Tableau X — Activités des carbures mixtes supportés sur alumine dans la déshydrogénation du
cyclohexane*

| Catalyseurs | $\%\dfrac{Mo}{Mo+W}$ | $V_D$ (a) |
|---|---|---|
| $I_1$ | 0 | 1,1 |
| $I_2$ | 11,16 | 2,6 |
| $I_3$ | 15,64 | 0,029 |
| $K_1$ | 24,5 | 1,8 |
| $K_2$ | 42,9 | 11,2 |
| $K_3$ | 56,4 | 6,24 |
| (a) Vitesse de déshydrogénation du cyclohexane en benzène. | | |

*Tableau XI — Activités des carbures mixtes supportés sur charbons actifs dans la déshydrogénation
du cyclohexane*

| Catalyseurs | $\%\dfrac{Mo}{Mo+W}$ | $V_D$ (a) |
|---|---|---|
| MLC1 | 0 | $7,4 \cdot 10^{-3}$ |
| MLC1-A | 36,37 | 0,61 |
| MLC-B-4 | 45,75 | 0,75 |
| MLC-B-5 | 66,01 | 3,65 |
| MLC2 | 66,35 | 0,56 |
| MLC-B-6 | 78,56 | 4,9 |
| MLC-4 | 100 | 0,79 |
| $K_4$ | 39,1 | 26,8 |
| $K_5$ | 47,7 | 13,0 |
| $K_6$ | 56,7 | 2,3 |
| (a) Vitesse de déshydrogénation du cyclohexane en benzène. | | |

pourrait permettre l'économie d'une étape d'hydrotraitement pour débarrasser les produits pétroliers de leurs composés soufrés. Par contre, les catalyseurs supportés sont affectés par le thiophène, l'activité et la sélectivité en produits cycliques diminuent rapidement, mais cet empoisonnement par le soufre est réversible. On retrouve donc progressivement les propriétés initiales du catalyseur après interruption de l'injection du thiophène ou après traitement de 823 K à 1023 K sous hydrogène pendant 12 heures. Les carbures mixtes de tungstène et de molybdène peuvent donc résister à une charge contenant accidentellement une grande teneur (jusqu'à 800 ppm) de produits soufrés alors que les catalyseurs classiques de réformage à base de platine sont irréversiblement empoisonnés par des quantités en soufre supérieures à 10 ppm dans les charges traitées en réformage catalytique.

## Revendications

1. Catalyseurs de réformage de produits pétroliers, caractérisés en ce qu'ils sont constitués, au moins en partie, de carbure de formule :

$$(Mo_xW_{1-x})_y\,C_z \text{ avec } 0<x<1,$$
$$1\leqslant y\leqslant 2 \text{ et } 0,8 \leqslant z\leqslant 1.$$

2. Catalyseurs selon la revendication 1, caractérisés en ce que $0,15\leqslant x\leqslant 0,70$.

3. Catalyseurs selon la revendication 1 ou 2, caractérisés en ce qu'ils contiennent jusqu'à 0,5% en poids de C libre.

4. Catalyseurs selon l'une des revendications 1 ou 2, caractérisés en ce qu'ils sont massiques, sous forme de poudre de granulométrie inférieure à 5 µm (test Fisher).

5. Catalyseurs selon l'une des revendications 1 ou 2, caractérisés en ce qu'ils sont supportés sur du charbon actif ou de l'alumine.

6. Procédé de réformage de produits pétroliers, caractérisé en ce qu'un catalyseur selon l'une des revendications 1 à 4 est utilisé, lequel a été préalablement nitruré vers 1023 K dans un mélange de $N_2$ et $H_2$.

7. Procédé selon la revendication 6, caractérisé en ce que le mélange de $N_2$ et $H_2$ est équimoléculaire.

## Patentansprüche

1. Katalysatoren zur Reformierung von Mineralölprodukten, dadurch gekennzeichnet, dass sie wenigstens teilweise aus Karbid der Formel :

$$(Mo_xW_{1-x})_y\,C_z \text{ mit } 0<x<1,$$
$$1\leqslant y\leqslant 2 \text{ und } 0,8 \leqslant z\leqslant 1$$

bestehen.

2. Katalysatoren nach dem Anspruch 1, dadurch gekennzeichnet, dass $0,15 \leqslant x\leqslant 0,70$.

3. Katalysatoren nach dem Anspruch 1 oder 2, dadurch gekennzeichnet, dass sie bis zu 0,5 Gew. % freien C enthalten.

4. Katalysatoren nach dem einen der Ansprüche 1 oder 2, dadurch gekennzeichnet, dass sie trägerlos in Form von Pulver einer Korngrösse unter 5 µm (Fisher-Test) sind.

5. Katalysatoren nach dem einen der Ansprüche 1 oder 2, dadurch gekennzeichnet, dass sie auf Aktivkohle oder Aluminiumoxid getragen sind.

6. Verfahren zur Reformierung von Mineralölprodukten, dadurch gekennzeichnet, dass ein Katalysator nach dem einen der Ansprüche 1 bis 4 verwendet wird, der vorab bei etwa 1023 K in einem Gemisch von $N_2$ und $H_2$ nitriert wurde.

7. Verfahren nach dem Anspruch 6, dadurch gekennzeichnet, dass das Gemisch von $N_2$ und $H_2$ äquimolekular ist.

## Claims

1. Catalysts for reforming petroleum products, characterised in that they consist, at least partially, of carbide corresponding to the formula ;

$$(Mo_xW_{1-x})_y\,C_z \text{ wherein } 0<x<1,$$
$$1\leqslant y\leqslant 2 \text{ and } 0,8 \leqslant z\leqslant 1.$$

2. Catalysts according to claim 1, characterised in that $0.15 \leqslant x \leqslant 0.70$.

3. Catalysts according to claim 1 or 2, characterised in that they contain up to 0.5%, by weight, of free C.

4. Catalysts according to one of claims 1 or 2, characterised in that they are in mass form, in the form of powder having a granulometry of less than 5 μm (Fisher test).

5. Catalysts according to one of claims 1 or 2, characterised in that they are supported on active carbon or alumina.

6. A process of reforming of petroleum products, characterised in that a catalyst according to one of claims 1 to 4 is used, which catalyst is initially nitrided at about 1,023 K in a mixture of $N_2$ and $H_2$.

7. A process according to claim 6, characterised in that the mixture of $N_2$ and $H_2$ is equimolecular.